# EUROPÄISCHE PATENTSCHRIFT

(11) **EP 0 762 012 B1**
(45) Veröffentlichungstag und Bekanntmachung des Hinweises auf die Patenterteilung: **05.04.2000**
(21) Anmeldenummer: 96111100.2
(22) Anmeldetag: 10.07.1996
(51) Int. Cl.: F16F 7/108, F16F 1/371, F16F 3/12

(54) **Schwingungstilger**
Dynamic damper
Amortisseur dynamique

(30) Priorität: 03.08.1995 DE 19528560
(43) Veröffentlichungstag der Anmeldung: 12.03.1997
(73) Patentinhaber: SGF SÜDDEUTSCHE GELENKSCHEIBENFABRIK GMBH & CO. KG., 84478 Waldkraiburg (DE)
(72) Erfinder: Andrä, Rainer, Dr.-Ing., 65554 Limburg (DE); Zimmermann, Dirk, 84539 Ampfing (DE); Reiter, Claus, 84453 Mühldorf (DE)
(74) Vertreter: Goetz, Rupert, Dipl.-Ing.

(56) Entgegenhaltungen:
- DE-A- 2 738 965
- DE-A- 3 834 806
- FR-A- 2 340 834
- US-A- 1 671 764
- US-A- 1 787 539
- PATENT ABSTRACTS OF JAPAN vol. 009, no. 261 (M-422), 18.Oktober 1985 & JP 60 109633 A (MAZDA KK), 15.Juni 1985,

## Beschreibung

Die Erfindung betrifft einen Schwingungstilger mit
- einem Tragkörper, der sich an einem ruhigzuhaltenden Bauteil befestigen läßt und eine Platte aufweist,
- einer Schwungmasse, die mit der Platte durch mindestens ein an ihr sowie an der Schwungmasse anvulkanisiertes elastisches Zwischenglied verbunden ist, und
- einer Sicherung, welche die Amplitude von Schwingungen der Schwungmasse begrenzt und diese für den Fall der Zerstörung des Zwischenglieds unverlierbar mit dem Tragkörper verbindet.

Eine solche Anordnung ist beispielsweise in der aus Fig. 2 ersichtlichen Ausführung bekannt. Dabei ist ein Tragkörper 10 aus einer ebenen Platte 12 und einer abgewinkelten Konsole 14 zusammensetzt. Die Platte 12 und die Konsole 14 sind beispielsweise miteinander verschweißt und haben ein gemeinsames zentrales Loch 16; die Konsole 14 hat in einem von der Platte 12 rechtwinklig wegragenden Bereich ferner ein Befestigungsloch 18 zum Befestigen des Tragkörpers 10 an einem nicht dargestellten Bauteil, dessen Schwingungen gedämpft werden sollen. Ein solches Bauteil kann beispielsweise ein Motorblock, ein Getriebegehäuse oder ein Auspuffschalldämpfer eines Kraftfahrzeugs sein. Mit dem Tragkörper 10 ist eine Schwungmasse 20 verbunden, die eine zur Platte 12 parallele Stirnfläche 22 sowie dazu normale Seitenflächen 24 aufweist.

Die Schwungmasse 20 ist üblicherweise durch ein Sicherungsseil 26 und/oder durch einen Sicherungsbolzen 28 mit dem Tragkörper 10 verbunden. In dem Beispiel gemäß Fig. 2 ist das Sicherungsseil 26 mit einem seiner beiden Enden an einer der Seitenflächen 24 der Schwungmasse 20 befestigt, beispielsweise festgeklemmt; das andere Ende des Sicherungsseils 26 läßt sich, anstatt am Tragkörper 10, wahlweise an dem Bauteil befestigen, dessen Schwingungen gedämpft werden sollen, also beispielsweise an einem Motorblock, Getriebegehäuse oder Schalldämpfer. Der Sicherungsbolzen 28 erstreckt sich durch das zentrale Loch 16 des Tragkörpers 10 sowie durch ein elastisches Zwischenglied 30 hindurch, das zu diesem Zweck ebenfalls ein Loch 32 aufweist. Das Zwischenglied 30 besteht im dargestellten Beipiel aus Gummi, ist an die Platte 12 des Tragkörpers 10 sowie an die Stirnfläche 22 der Schwungmasse 20 anvulkanisiert und erstreckt sich auch um diese herum. Der Sicherungsbolzen 28 erfüllt im Vergleich mit dem Sicherungsseil 26 die zusätzliche Aufgabe, die Schwingungsamplitude der Schwungmasse 20 zu begrenzen und dadurch vor allem bei Schwingungsresonanz einer vorzeitigen Zerstörung des elastischen Zwischengliedes 30 entgegenzuwirken.

Bekannte Schwingungstilger der in Fig. 2 dargestellten Art erfordern einen beträchtlichen Herstellungsaufwand, da zum Befestigen des Sicherungsseils 26 und des Sicherungsbolzens 28 je mindestens ein Loch in der Schwungmasse 20 erforderlich ist, das im allgemeinen erst gebohrt werden kann, nachdem das elastische Zwischenglied 30 an den Tragkörper 10 und an die Schwungmasse 20 anvulkanisiert worden ist. Würde man solche Löcher vorher bohren, dann wären besondere Maßnahmen erforderlich, um zu verhindern, daß die Löcher verstopfen, z. B. dadurch, daß beim Vulkanisieren des Zwischengliedes 30 Gummi in die Löcher eindringt und diese dann erst wieder freigelegt werden müssen.

Der Erfindung liegt deshalb die Aufgabe zugrunde, einen Schwingungstilger in besonders einfacher, zugleich aber verläßlicher Weise gegen Zerstörung des elastischen Zwischengliedes sowie gegen Verlust der Schwungmasse zu sichern.

Die Aufgabe ist erfindungsgemäß ausgehend von einem Schwingungstilger der eingangs beschriebenen Gattung dadurch gelöst, daß die Sicherung mindestens eine ringförmig in sich geschlossene Schlinge aufweist, die in je mindestens eine am Tragkörper und an der Schwungmasse ausgebildete Halterung derart eingehängt ist, daß sie die Schwingungsamplitude der Schwungmasse in einer zur Platte parallelen Hauptschwingungsrichtung begrenzt.

Aus der US-PS 4,817,909 ist eine insbesondere für Auspuffanlagen von Kraftfahrzeugen vorgesehene Aufhängung bekannt, die zwei parallel zueinander angeordnete Buchsen aufweist, von denen eine am Kraftfahrzeug und die andere an einem Teil der Auspuffanlage zu befestigen ist. Die beiden Buchsen sind durch einen Flachdraht aus Stahl miteinander verbunden, dessen Enden um je eine der Buchsen derart herumgebogen sind, daß die Buchsen in einem vorbestimmten Abstand voneinander gehalten sind. Die beiden Buchsen sowie der Flachdraht sind in ein Elastomer eingebettet, das zwischen den Buchsen einen Zwischenkörper bildet. Dieser ist im Bereich der am Kraftfahrzeug zu befestigenden Buchse schlank und verbreitert sich zur anderen Buchse hin, so daß die an dieser befestigte Auspuffanlage gegenüber der am Kraftfahrzeug befestigten Buchse pendeln kann. Der Flachdraht begrenzt zwar die Dehnbarkeit des Zwischenkörpers, kann aber, da er in dessen Symmetrieebene liegt, also in einer bezüglich Biegebeanspruchungen neutralen Zone, Pendelbewegungen nicht begrenzen.

Das erfindungsgemäße Herumlegen einer oder mehrerer Schlingen um je mindestens eine am Tragkörper und an der Schwungmasse ausgebildete Halterung erfordert nur einen geringen Arbeitsaufwand und läßt sich in geeigneten Fällen auch automatisieren. Mit dem Anbringen der Schlinge oder Schlingen braucht nicht gewartet zu werden, bis das elastische Zwischenglied an der Platte und an der Schwungmasse anvulkanisiert worden ist; im Gegenteil ist es vorteilhaft, wenn der Tragkörper, die Schwungmasse und mindestens eine Schlinge schon zusammengefügt sind und dann durch Einbringen eines oder mehrerer elastischer Zwischenglieder zu einer kompakten Baugruppe miteinander verbunden werden.

Die Schlinge ist vorzugsweise ein Faden- oder Bandwickel einer bei elastischen Gelenkscheiben bekannten Art (DE-A 2 001 376). Ein solches Faden- oder Bandwickel kann entweder vorgefertigt oder in situ durch Umwickeln der am Tragkörper und an der Schwungmasse ausgebildeten Halterungen gebildet werden. In beiden Fällen kann es zweckmäßig sein, die von einem Faden- oder Bandwickel gebildete Schlinge mit Gummi zu imprägnieren.

Die Schlinge kann aber auch ein homogener Ring aus einem Werkstoff, beispielsweise Kunststoff sein, dessen Elastizitätsmodul höher als derjenige des Zwischengliedes ist.

Zum Begrenzen der Schwingungsamplitude der Schwungmasse eignen sich erfindungsgemäße Schlingen besonders, wenn jede von ihnen in einer Ebene angeordnet ist, die sich schräg zur Hauptschwingungsebene der Schwungmasse erstreckt.

Für den Fall, daß zum Begrenzen der Schwingungsamplitude der Schwungmasse eine einzige Schlinge nicht ausreicht, ist es zweckmäßig, daß zwei Schlingen symmetrisch bezüglich einer gemeinsamen Mittelebene des Tragkörpers und der Schwungmasse angeordnet sind.

Die bzw. jede Schlinge kann achterförmig in sich verdreht in die Halterungen eingehängt und dadurch besonders sicher festgehalten sein.

Um elektrostatische Aufladungen der Schwungmasse zu vermeiden, kann eine Weiterbildung der Erfindung darin bestehen, daß mindestens eine als Sicherung dienende Schlinge eine elektrisch leitende Verbindung zwischen der Schwungmasse und dem Träger bildet. Zu diesem Zweck kann die Schlinge beispielsweise einzelne Metallfäden enthalten.

Vorzugsweise ist die bzw. jede Schlinge dadurch geschützt angeordnet, daß sie mindestens teilweise in das elastische Zwischenglied eingebettet ist.

Die Halterungen lassen sich in besonders einfacher Weise derart herstellen, daß sie, in einer zur Platte normalen Ebene betrachtet, voneinander abgewandte hakenförmige Profile haben. Solche Profile lassen sich beispielsweise bei einem im wesentlichen plattenförmigen Tragkörper besonders leicht durch Stanzen, und bei einer massiven Schwungmasse in vielen Fällen besonders einfach dadurch herstellen, daß die Schwungmasse samt Halterung(en) gegossen wird.

Das Einhängen und Festlegen der Schlinge oder Schlingen wird besonders erleichtert, wenn die Halterungen, in einer zur Platte parallelen Ebene betrachtet, T-förmige Profile haben.

Die bzw. jede Halterung an der Schwungmasse weist zweckmäßigerweise eine in diese eingearbeite, in Richtung zum Tragkörper geschlossene Nut auf.

Ausführungsbeispiele der Erfindung werden im folgenden anhand schematischer Zeichnungen näher erläutert. Es zeigen,
- Fig. 1: einen Schwingungstilger, der die Erfindungsmerkmale aufweist, im übrigen aber dem bekannten Schwingungstilger gemäß Fig. 2 entspricht,
- Fig. 3: einen weiteren Schwingungstilger mit den Merkmalen der Erfindung, der im übrigen aber ebenfalls der bekannten Anordnung gemäß Fig. 2 entspricht,
- Fig. 4: einen dritten Schwingungstilger nach der Erfindung,
- Fig. 5: den Schnitt V-V in Fig. 4,
- Fig. 6: einen vierten Schwingungstilger gemäß der Erfindung,
- Fig. 7: einen fünften Schwingungstilger gemäß der Erfindung,
- Fig. 8: einen sechsten Schwingungstilger gemäß der Erfindung,
- Fig. 9: den Grundriß der Tragplatte des in Fig. 8 dargestellten Schwingungstilgers,
- Fig. 10: eine Seitenansicht der zugehörigen Schwungmasse,
- Fig. 11: den Grundriß, in Richtung des Pfeils XI in Fig. 10 gesehen, und
- Fig. 12: die Vorderansicht in Richtung des Pfeils XII in Fig. 10.

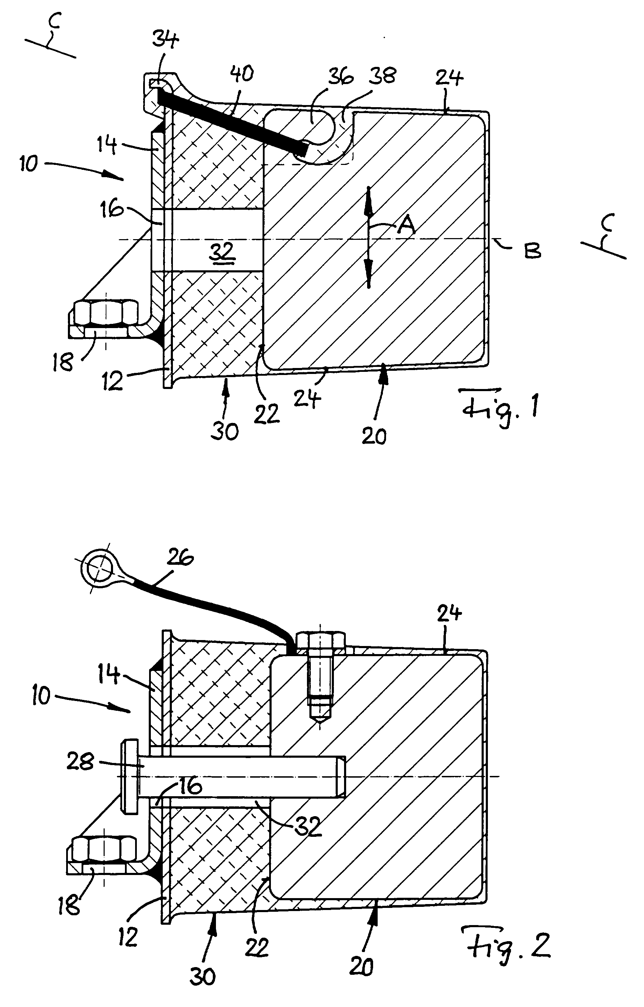

Der in Fig. 1 dargestellte Schwingungstilger stimmt in seinen mit den Bezugszeichen 10 bis 32 bezeichneten Einzelheiten mit dem eingangs anhand der Fig. 2 beschriebenen bekannten Schwingungstilger überein. Abweichend von Fig. 2 weist der in Fig. 1 dargestellte Schwingungstilger an seinem Tragkörper 10 und an seiner Schwungmasse 20 je eine hakenförmige Halterung 34 bzw. 36 auf. Die Halterung 34 am Tragkörper 10 ist dadurch ausgebildet, daß die Platte 12 in ihrem in Fig. 1 oberen Randbereich in Richtung von der Schwungmasse 20 weg abgewinkelt ist. Die Halterung 36 ist hingegen durch eine in die Schwungmasse 20 eingearbeitete, beispielsweise eingefräste, in Richtung zum Tragkörper 10 hin geschlossene Nut 38 aus der Schwungmasse 20 herausgearbeitet.

Die beiden Halterungen 34 und 36 sind miteinander durch eine ringförmig in sich geschlossene Schlinge 40 verbunden, die beispielsweise als Faden- oder Bandwickel hergestellt, dann mit Rohgummi oder -kautschuk imprägniert und schließlich in der aus Fig. 1 ersichtlichen Weise an den Halterungen 34 und 36 eingehängt worden ist. Das elastische Zwischenglied 30 wird erst anschließend eingebracht, beispielsweise dadurch, daß Rohgummi in den Zwischenraum zwischen der Platte 12 des Tragkörpers und der Stirnfläche 22 der Schwungmasse 20 eingespritzt wird, wobei zugleich die Halterung 34 und die gesamte Schwungmasse 20 sowie die Schlinge 40 umspritzt und die Nut 38 ausgefüllt wird. Anschließend wird der Rohgummi in üblicher Weise vulkanisiert. Beim fertigen Schwingungstilger ist die Schlinge 40 von außen nicht mehr sichtbar, da sie vollständig in Gummi eingebettet ist. Dadurch ist die Schlinge 40 in ihrer Lage festgelegt und gegen Beschädigungen durch äußere Einflüsse besonders gut geschützt.

In Fig. 1 ist mit einem Doppelpfeil A die Richtung gekennzeichnet, in der die Schwungmasse 20 hauptsächlich schwingt. Diese Hauptschwingungsrichtung A ist parallel zu den Ebenen der Platte 12 des Tragkörpers 10 sowie der Stirnfläche 22 der Schwungmasse 20. Die Schwungmasse 20 ist in bezug auf eine zur Platte 12 und zur Stirnfläche 22 normale Mittelebene B im wesentlichen symmetrisch gestaltet. Eine Ausnahme von dieser Symmetrie macht nur die durch die Nut 38 abgegrenzte Halterung 36. Die Halterungen 34 und 36 sind gemäß Fig. 1 in bezug zueinander derart angeordnet, daß die Schlinge 40 in einer Ebene C liegt, die mit der Hauptschwingungsrichtung A und mit der Mittelebene B je einen spitzen Winkel einschließt. Mit dieser Anordnung wird erreicht, daß die Schlinge 40 die Schwingungsamplitude der Schwungmasse 20 in der Hauptschwingungsrichtung A, in Fig. 1 allerdings nur nach unten hin, unmittelbar begrenzt, wodurch die Amplitude aber mittelbar auch nach oben hin begrenzt wird. Gemäß Fig. 1 ist der Winkel zwischen A und C erheblich größer als der Winkel zwischen B und C.

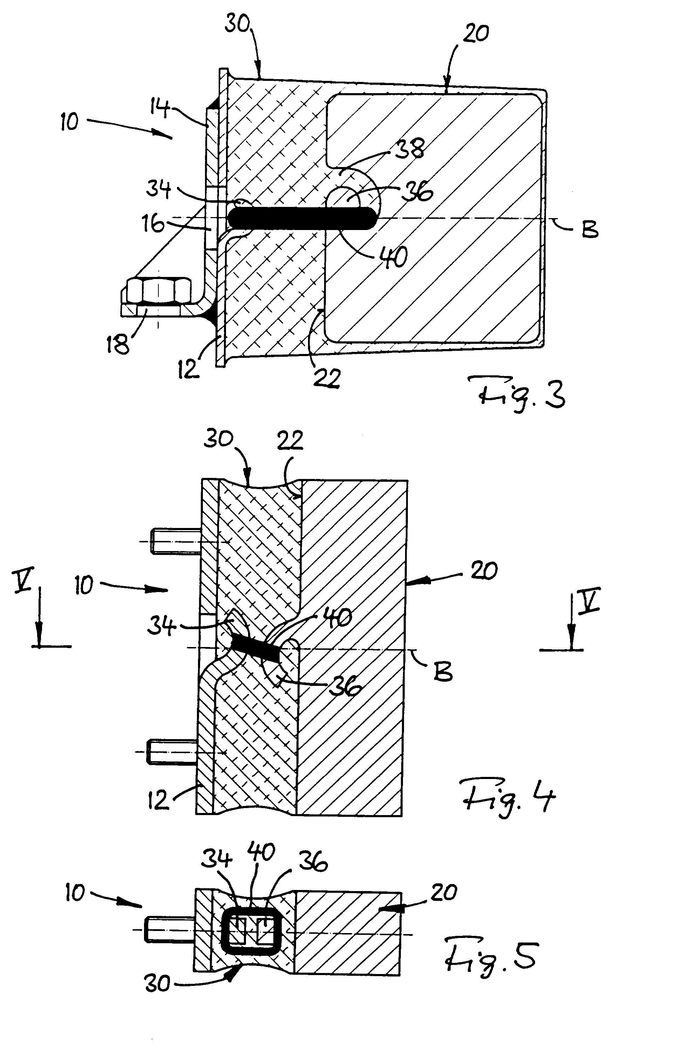

Der Schwingungstilger gemäß Fig. 3 unterscheidet sich von dem in Fig. 1 dargestellten im wesentlichen dadurch, daß beide Halterungen 34 und 36 in der Mittelebene B angeordnet sind und dementsprechend auch die Schlinge 40 in der Mittelebene B liegt.

Bei dem in Fig. 4 und 5 dargestellten Schwingungstilger sind die hakenförmigen Halterungen 34 und 36 von einer Ausprägung der Platte 12 bzw. einem Ansatz der Schwungmasse 20 gebildet; die Ebene C der Schlinge 40 schließt mit der Mittelebene einen Winkel ein, der sich von Null nur wenig unterscheidet.

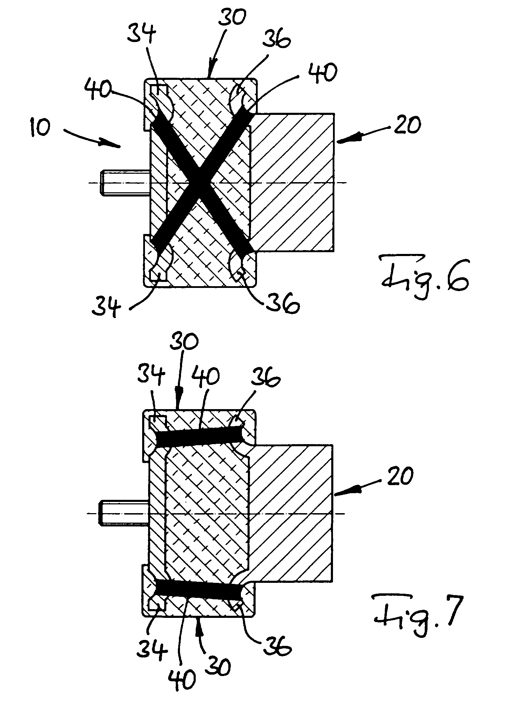

Die in Fig. 6 und 7 dargestellten erfindungsgemäßen Schwingungstilger unterscheiden sich von den vorangehend beschriebenen Ausführungsformen der Erfindung dadurch, daß der Tragkörper 10 und die Schwungmasse 20 je zwei Halterungen 34 bzw. 36 aufweisen, und daß dementsprechend zwei Schlingen 40 die Schwungmasse 20 mit dem Tragkörper 10 verbinden. Die Anordnungen gemäß Fig. 6 und 7 sind beide symmetrisch in bezug auf die Ebene B, die eine gemeinsame Mittelebene des Tragkörpers 10, der Schwungmasse 20 und des elastischen Zwischengliedes 30 ist. Gemäß Fig. 6 überkreuzen sich die beiden Schlingen 40 in der Mittelebene B; gemäß Fig. 7 sind die beiden Schlingen hingegen zur Mittelebene B konvergierend angeordnet, ohne diese zu erreichen.

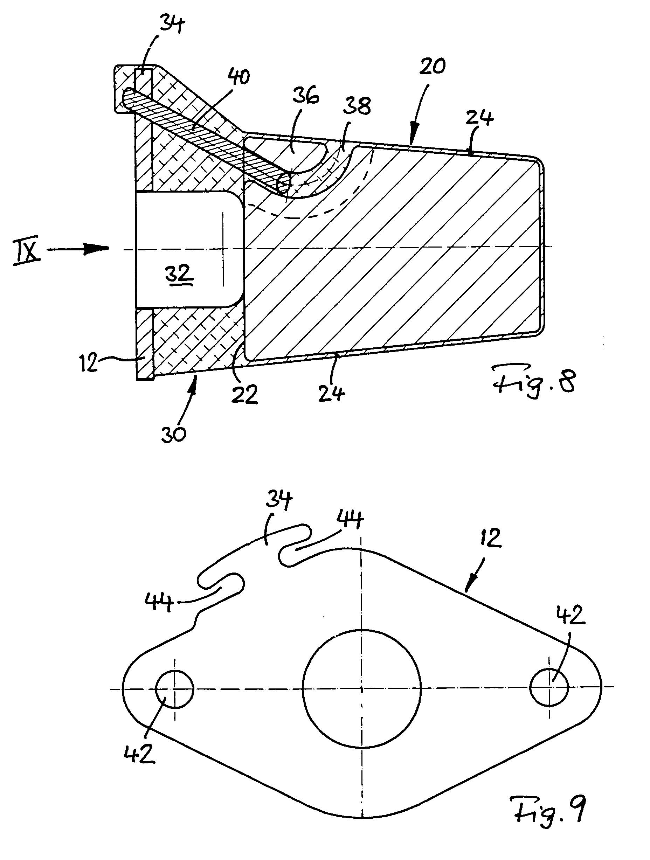

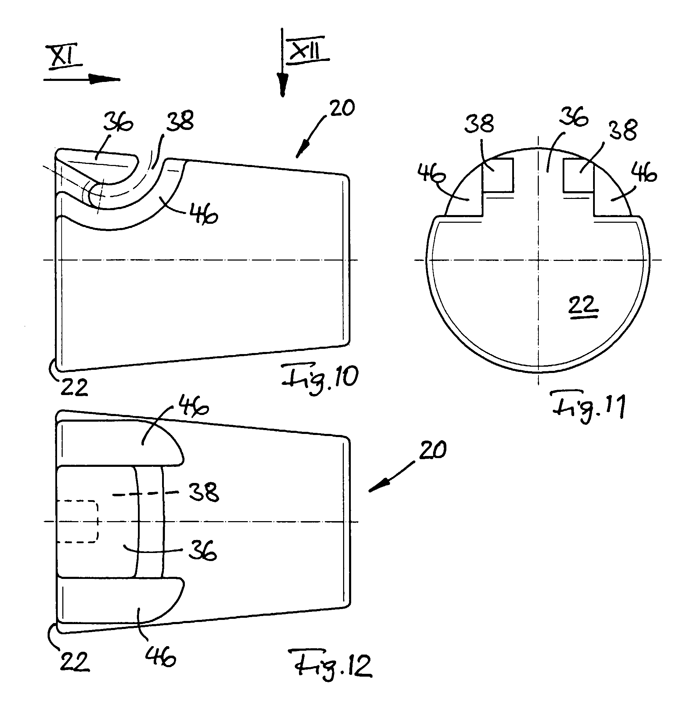

Der Schwingungstilger gemäß Fig. 8 entspricht weitgehend dem in Fig. 1 dargestellten, seine in Fig. 9 bis 12 gezeichneten Einzelteile sind jedoch teilweise abweichend gestaltet. Die Platte 12 ist ein völlig ebenes Stanzteil in der Art eines Flansches mit zwei Befestigungslöchern 42. Die an dieser Platte 12 ausgebildete Halterung 34 hat ein T-förmiges Profil mit zwei einander gegenüberliegenden Schlitzen 44 zum Einlegen der Schlinge 40. Die an der Schwungmasse 20 ausgebildete Halterung 36 hat eine in der Ansicht gemäß Fig. 12 U-förmige Nut 38 zum Einlegen der Schlinge 40 und weist dadurch an der Stirnfläche 22 ebenfalls ein T-förmiges Profil auf. Um das Einlegen der Schlinge 40 in die Nut 38 zu erleichtern, ist diese durch seitliche Ausnehmungen 46 erweitert, die anschließend mit dem Material des elastischen Zwischengliedes 30 ausgefüllt werden.

## Patentansprüche

1. Schwingungstilger mit
- einem Tragkörper (10), der sich an einem ruhigzuhaltenden Bauteil befestigen läßt und eine Platte (12) aufweist,
- einer Schwungmasse (20), die mit der Platte (12) durch mindestens ein an ihr sowie an der Schwungmasse anvulkanisiertes elastisches Zwischenglied (30) verbunden ist, und
- einer Sicherung, welche die Amplitude von Schwingungen der Schwungmasse (20) begrenzt und diese für den Fall der Zerstörung des Zwischenglieds (30) unverlierbar mit dem Tragkörper (10) verbindet,
dadurch gekennzeichnet, daß die Sicherung mindestens eine ringförmig in sich geschlossene Schlinge (40) aufweist, die in je mindestens eine am Tragkörper (10) und an der Schwungmasse (20) ausgebildete Halterung (34, 36) derart eingehängt ist, daß sie die Schwingungsamplitude der Schwungmasse (20) in einer zur Platte (12) parallelen Hauptschwingungsrichtung (A) begrenzt.

2. Schwingungstilger nach Anspruch 1,
dadurch gekennzeichnet, daß die Schlinge (40) ein Faden- oder Bandwickel ist.

3. Schwingungstilger nach Anspruch 2,
dadurch gekennzeichnet, daß die Schlinge (40) mit Gummi imprägniert ist.

4. Schwingungstilger nach Anspruch 1,
dadurch gekennzeichnet, daß die Schlinge (40) ein homogener Ring aus einem Werkstoff ist, dessen Elastizitätsmodul höher als derjenige des Zwischengliedes (30) ist.

5. Schwingungstilger nach einem der Ansprüche 1 bis 4,
dadurch gekennzeichnet, daß die Schlinge (40) in einer Ebene (C) angeordnet ist, die sich schräg zur Hauptschwingungsebene (A) der Schwungmasse (20) erstreckt.

6. Schwingungstilger nach einem der Ansprüche 1 bis 5,
dadurch gekennzeichnet, daß zwei Schlingen (40) symmetrisch bezüglich einer gemeinsamen Mittelebene (B) des Tragkörpers (10) und der Schwungmasse (20) angeordnet sind.

7. Schwingungstilger nach einem der Ansprüche 1 bis 6,
dadurch gekennzeichnet, daß die bzw. jede Schlinge (40) achterförmig in sich verdreht in die Halterungen (34,36) eingehängt ist.

8. Schwingungstilger nach einem der Ansprüche 1 bis 7,
dadurch gekennzeichnet, daß mindestens eine als Sicherung dienende Schlinge (40) eine elektrisch leitende Verbindung zwischen der Schwungmasse (20) und dem Träger (10) bildet.

9. Schwingungstilger nach einem der Ansprüche 1 bis 8,
dadurch gekennzeichnet, daß die bzw. jede Schlinge (40) mindestens teilweise in das elastische Zwischenglied (30) eingebettet ist.

10. Schwingungstilger nach einem der Ansprüche 1 bis 9,
dadurch gekennzeichnet, daß die Halterungen (34, 36) in einer zur Platte (12) normalen Ebene voneinander abgewandte hakenförmige Profile haben.

11. Schwingungstilger nach einem der Ansprüche 1 bis 10,
dadurch gekennzeichnet, daß die Halterungen (34,36) in einer zur Platte (12) parallelen Ebene T-förmige Profile haben.

12. Schwingungstilger nach einem der Ansprüche 1 bis 11,
dadurch gekennzeichnet, daß die Halterung (36) an der Schwungmasse (20) eine in diese eingearbeitete, in Richtung zum Tragkörper (10) geschlossene Nut (38) aufweist.

## Claims

1. An oscillation damper, comprising
- a support body (10) which is adapted to be fastened to a structural member to be kept vibration-free and includes a plate (12),
- an inert mass (20) connected with the plate (12) by at least one resilient intermediate member (30) vulcanised to the plate (12) as well as to the inert mass,
and
- a safety means which limits the amplitude of vibrations of the inert mass (20) and connects it in a captive manner with the support body (10) in case of the intermediate member (30) being destroyed,
characterised in that the safety means comprises at least one annular loop (40) closed in itself that is hooked into at least one mounting (34, 36) each formed at the support body (10) and the inert mass (20) in such a manner that it limits the oscillation amplitude of the inert mass (20) in a main direction of oscillation (A) parallel to the plate (12).

2. The oscillation damper according to claim 1,
characterised in that the loop (40) is a thread or ribbon winding.

3. The oscillation damper according to claim 2,
characterised in that the loop (40) is impregnated with rubber.

4. The oscillation damper according to claim 1,
characterised in that the loop (40) is a homogeneous ring made of a material the elasticity module of which is higher than that of the intermediate member (30).

5. The oscillation damper according to claims 1 to 4,
characterised in that the loop (40) is arranged in a plane (C) which extends obliquely with respect to the main plane of oscillation (A) of the inert mass (20).

6. The oscillation damper according to one of claims 1 to 5,
characterised in that two loops (40) are arranged symmetrically with respect to a common centre plane (B) of the support body (10) and the inert mass (20).

7. The oscillation damper according to one of claims 1 to 6,
characterised in that the or each loop (40), twisted in itself to an eight, is hooked into the mountings (34, 36).

8. The oscillation damper according to one of claims 1 to 7,
characterised in that at least one loop (40) serving as safety means forms an electrically conductive connection between the centrifugal mass (20) and the support (10).

9. The oscillation damper according to one of claims 1 to 8,
characterised in that the or each loop (40) is at least partially embedded in the resilient intermediate member (30).

10. The oscillation damper according to one of claims 1 to 9,
characterised in that the mountings (34, 36) have hook-shaped profiles facing away from each other in a plane normal with respect to the plate (12).

11. The oscillation damper according to one of claims 1 to
10, characterised in that the mountings (34, 36) have T-shaped profiles in a plane parallel with respect to the plate (12).

12. The oscillation damper according to one of claims 1 to 11, characterised in that at the inert mass (20) the mounting (36) has a groove (38) machined into the same which is closed in the direction of the support body (10).

## Revendications

1. Amortisseur dynamique comprenant
- un corps de support (10) qui peut être fixé à une pièce à maintenir au repos et présente une plaque (12),
- une masse d'inertie (20) qui est reliée à la plaque (12) par au moins un élément élastique intermédiaire (30) vulcanisé sur celle-ci ainsi que sur la masse d'inertie, et
- une sécurité qui limite l'amplitude d'oscillations de la masse d'inertie (20) et relie cette dernière de façon imperdable au corps de support (10) au cas où l'élément intermédiaire (30) serait détruit,
caractérisé en ce que la sécurité présente au moins une boucle (40) annulaire fermée en soi qui est accrochée dans chacune des au moins une fixations formées sur le corps de support (10) et sur la masse d'inertie (20) de telle façon qu'elle limite l'amplitude d'oscillation de la masse inerte (20) dans une direction d'oscillation principale (A) parallèle à la plaque (12).

2. Amortisseur dynamique selon la revendication 1,
caractérisé en ce que la boucle (40) est un enroulement de fils ou de bandes.

3. Amortisseur dynamique selon la revendication 2,
caractérisé en ce que la boucle (40) est imprégnée de caoutchouc.

4. Amortisseur dynamique selon la revendication 1,
caractérisé en ce que la boucle (40) est un anneau homogène en un matériau dont le module d'élasticité est supérieur à celui de l'élément intermédiaire (30).

5. Amortisseur dynamique selon l'une quelconque des revendications 1 à 4,
caractérisé en ce que la boucle (40) est disposée dans un plan (C) qui s'étend incliné par rapport au plan d'oscillation principal (A) de la masse inerte (20).

6. Amortisseur dynamique selon l'une quelconque des revendications 1 à 5,
caractérisé en ce que deux boucles (40) sont disposées symétriquement par rapport à un plan médian (B) commun du corps de support (10) et de la masse inerte (20).

7. Amortisseur dynamique selon l'une quelconque des revendications 1 à 6,
caractérisé en ce que la, respectivement chaque boucle (40) est accrochée tordue en forme de huit dans les fixations (34, 36).

8. Amortisseur dynamique selon l'une quelconque des revendications 1 à 7,
caractérisé en ce qu'au moins une boucle (40) faisant office de sécurité forme une liaison conductrice de l'électricité entre la masse inerte (20) et le support (10).

9. Amortisseur dynamique selon l'une quelconque des revendications 1 à 8,
caractérisé en ce que la, respectivement chaque boucle (40) est noyée au moins partiellement dans l'élément intermédiaire (30) élastique.

10. Amortisseur dynamique selon l'une quelconque des revendications 1 à 9,
caractérisé en ce que les fixations (34, 36) ont, dans un plan normal à la plaque (12), des profils en forme de crochets disposés dos à dos.

11. Amortisseur dynamique selon l'une quelconque des revendications 1 à 10,
caractérisé en ce que les fixations (34, 36) ont, dans un plan parallèle à la plaque (12), des profils en forme de T.

12. Amortisseur dynamique selon l'une quelconque des revendications 1 à 11,
caractérisé en ce que la fixation (36) à la masse inerte (20) présente une rainure (38) fermée dans la direction du corps de support (10), usinée dans la masse inerte.
